(19) Europäisches Patentamt
European Patent Office
Office européen des brevets

(11) Publication number: **0 228 593**
**A2**

(12) # EUROPEAN PATENT APPLICATION

(21) Application number: 86116825.0

(22) Date of filing: 03.12.86

(51) Int. Cl.[4]: C 02 F 5/08
C 11 D 7/36

(30) Priority: 10.12.85 US 807414

(43) Date of publication of application:
15.07.87 Bulletin 87/29

(84) Designated Contracting States:
DE GB IT

(71) Applicant: CHESEBROUGH-POND'S INC.
Nyala Farm Road
Westport Connecticut 06881(US)

(72) Inventor: Hores, Paul G.
131 Chestnut Hill Road
Wilton Connecticut 06897(US)

(74) Representative: Jaeger, Klaus, Dr.
Jaeger & Partner Patentanwälte Pippinplatz 4a
D-8035 München-Gauting(DE)

(54) **Composition for cleaning water-containing devices.**

(57) A composition for cleaning water-containing devices, such as toilet bowls, is disclosed. It is an admixture of: (1) a halogenated halohydantoin; and (2) a compatible scale inhibitor compound or composition, such as a salt of a phosphono carboxylate.

EP 0 228 593 A2

Croydon Printing Company Ltd

# COMPOSITION FOR CLEANING WATER-CONTAINING DEVICES

## BACKGROUND OF THE INVENTION

### Field of the Present Invention

The present invention relates to a novel composition for cleaning water-containing devices, particularly toilet bowls.

### Description of the Prior Art

It is known to provide a source of halogen and a separate source of scale inhibiting compound to effect the cleaning of water-containing devices, e.g., toilet bowls. The halogen source exerts a biocidal action on the aqueous solution contained in the device while the scale inhibiting compound prevents the deposition of undesired colored scale on the surfaces of the device due to the presence of metallic cations dissolved in the water. For example, U. S. Patent Nos. 4,283,300 to J. L. Kurtz, 4,302,350 to R. H. Callicott, and 4,374,572 to R. H. Callicott all indicate supplying a hypochlorite source from a dispensing means separate from that which dispenses any stain or scale inhibiting additives (see Col. 6, lines 45 - 49 of the '300 patent, Col. 6, lines 55 - 59 of the '350 patent, and Col. 14, lines 22 - 31 of the '572 patent).

More recently, it has been proposed in U. S. Patent No. 4,537,697 to T. A. Girard that halogenated hydantoins can be used as cleaning agents in such water-containing devices as swimming pools, hot tubs, water cooling towers, and toilet bowls. The Girard patent is, however, utterly silent regarding the use of any scale inhibitor compound or composition to preclude the formation of undesired scale on the surfaces of the device due to dissolved metallic cations in solution in the water contained in the device. Exemplary

cations which can lead to scale formation include such ions as manganese, copper and iron.

SUMMARY OF THE PRESENT INVENTION

The present invention is directed to a composition for cleaning water-containing devices, such as toilet bowls, which comprises a mixture of an effective amount for cleaning of the device of at least one halohydantoin cleaning compound admixed with an effective amount for scale inhibition in the device of at least one compatible scale inhibitor composition.

DETAILED DESCRIPTION OF THE PRESENT INVENTION

The present invention will be described hereinafter with specific reference to the cleaning of a toilet bowl. However, it is to be understood that the invention has wider applicability and can be used to clean other water-containing devices where the biocidal action of free halogen and the scale inhibiting action of a compatible scale inhibitor composition is desired. Suitable devices of this sort can include: swimming pools; hot tubs; water cooling towers; and toilet bowls.

In regard to toilet bowl cleaning, it is preferred to use the compositions of the present invention with the novel dispenser described and claimed in the copending U. S. Application Serial No. _______, of Paul G. Hores et al., entitled "Device for Treatment of a Toilet Bowl", filed on even date herewith.

The halogenated halohydantoin component of the present composition forms a major part of the present invention, e.g., from about 65% to about 99% by weight of the composition, preferably about 80% to about 90%, by weight. Compounds of the formula:

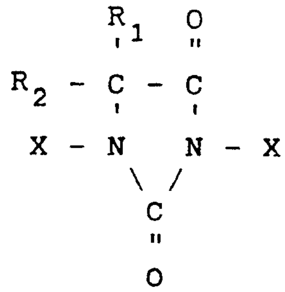

are exemplary with X indicating halogen (e.g., bromine or chlorine) and $R_1$ and $R_2$ independently being $C_1$ - $C_2$ alkyl. Such compounds are described in the aforesaid U. S. Patent No. 4,537,697 to T. A. Girard.

In regard to toilet bowl cleaning, these compounds have been found to be desirable since they do not produce an offensive chloramine odor in the toilet bowl. Corrosivity to metal parts is lower, and they provide a very cost effective delivery of halogen when compared to trichlorocyanuric acid, for example.

The use of bromine as the halogen group leads to formation of bromamines which have biocidal activity. Chloramines resulting from chlorine containing species do not have appreciable biocidal activity. Suitable adjustment of the type of alkyl groups renders the halohydantoin either more soluble or less soluble. The methyl, methyl compound is the most soluble with the methyl, ethyl and ethyl, ethyl species being progressively less soluble. Appropriate mixing of the least soluble hydantoin with the most soluble hydantoin can also be used as a technique to get the desired solubility for the entire composition. It is desirable to have the solubility of the halohydantoin generally equivalent to the solubility of the scale inhibitor component to be described below when their respective amounts in the composition are taken into account.

Preferred commercially available compositions are available from Glyco, Inc. of Norwalk, Connecticut. For example, their GSD-560 brand material is believed to

comprise 40% 1,3-bromochloro-5,5-dimethyl hydantoin, 40% 1,3-dichloro-5,5-dimethyl hydantoin, 10% 1,3-dibromo-5,5-dimethyl hydantoin, 5% 1,3-bromochloro-5-ethyl-5-methyl hydantoin and 5% 1,3-dichloro-5-ethyl-5-methyl hydantoin. One preferred composition in accordance with the present invention comprises about 60% by weight of this material. The GSD-615 material from Glyco, Inc. comprises about 25% of another preferred embodiment of the present invention. It is believed to contain 60% 1,3-dibromo-5-ethyl-5-methyl hydantoin, 30% 1,3-bromochloro-5-ethyl-5-methyl hydantoin and 10% 1,3-dichloro-5- ethyl-5-methyl hydantoin.

The present compositions also contain an effective amount for scale inhibition of a compatible scale inhibitor composition or compound. The word "compatible" as used herein is intended to denote a scale inhibitor which is essentially non-reactive with halohydantoin when in admixture therewith. As noted above, the solubility of the scale inhibitor component will preferably be equivalent to that of the halogen source taking into account their respective weight percents in the composition. The amount of scale inhibitor present in the composition can range from about 1% to about 35% with amounts of 10% - 20% being preferred. These antiscale compounds can be divided into three general classes: flocculants, dispersants, and chelants.

One preferred scale inhibitor has been found to be the salts of phosphono carboxylates. A particularly preferred scale inhibitor is the sodium salt (e.g., tetrasodium salt) of 2-phosphonobutane-1,2,3-tricarboxylic acid. The acid form is commercially available under the trademark BAYHIBIT AM from Bayer and is most preferably present in the composition of the present invention in its tetrasodium salt form at about 15%, by weight. Use of the acid form is not recommended since it will prematurely react with the halohydantoin component.

Other compatible scale inhibitor compounds or compositions which can be used include: sodium hexametaphosphate; sodium tripolyphosphate; sodium pyrophosphate; sodium tetrametaphosphate; sodium polyphosphate; sodium acid pyrophosphate; tetrasodium pyrophosphate; disodium dihydrogen pyrophosphate; sodium tetraphosphate; sodium metaphosphate; sodium trimetaphosphate; non-crystalline sodium metaphosphate and tetraphosphate (NALCO No. 519 brand); alkylene-polyamine- methylene phosphonic acids and polymers (available under the trademark DEQUEST from Monsanto); 1-hydroxyethylidene-1,1-diphosphonic acid and its salts; phosphated polyol esters; hydroxylamine phosphate esters; synthetic polymers of various polyacrylates, polymethacrylates, polyacrylamides, and partially hydrolyzed polyacrylamides; glycoheptonates; sodium gluconate; sodium citrate; anionic surfactants (sulfates, sulfonates, phosphates and the like); natural and modified starch; gums, alginates and other polysaccharides; cellulose derivatives; tannin derivatives; lignin and lignosulfonate derivatives; natural polymers; sulfamic acid salts; organic polymers; and isopropenyl phosphonic acid polymers and copolymers.

Two preferred representative tablets, for example, which can be formulated are: (1) a 3 - 15 g. tablet product designed to last for about 90 days and comprising 60% of the GSD-560 material, 25% of the GSD-615 material, and 15% of the tetrasodium salt of the BAYHIBIT AM brand material; and, most preferably, (2) a 10 - 15 g. (preferably 15 g. pressed at 10,000 $lbs/in^2$ gauge) tablet designed to last for 30 - 40 days and comprising 35% - 75% (preferably 45%) of the GSD-560 material, 20% - 30% (preferably 20%) of the GSD-615 material, and 25% - 35% (preferably 35%) of sodium pyrophosphate.

It is considered within the scope of the present invention to provide the composition, if desired, with a suitable dye additive to serve as an indicator for the user that the composition is still being dissolved by action of

the water and is effective in the water-containing device of interest.

The following Examples illustrate certain embodiments of the present invention.

## EXAMPLE 1

Forty eight grams of GSD-615 halohydantoin (from Glyco Inc., of Norwalk, Connecticut), 58 g of GSD-560 halohydantoin, and 4 g of the tetrasodium salt of 2-phosphonobutane-1,2,4-tricarboxylic acid (available as BAYHIBIT AM from Bayer) were stirred and agitated by hand and pressed into tablets at 10,000 $lbs/in^2$. It was difficult to press the material into the tablets since it stuck to the bottom of the die. Some brown decomposition on the peripheral surface of the die was noted. When the pressed tablet was placed in water it did not disintegrate. Only very slow disintegration was noted after about 100 to 120 flushes when placed in the device shown in the copending application of Paul Hores et al.

## EXAMPLE 2

With stirring, 2-phosphono-1,2,4-tricarboxylic acid (available as BAYHIBIT AM from Bayer) at a pH of 1.6, was neutralized with potassium hydroxide (45% strength) to a pH of 8.4. Then 22 g of GSD-615 halohydantoin, 22 g of GSD-560 halohydantoin, and 6 g of the neutralized BAYHIBIT brand material were mixed together in a WARING blender and were pressed at 10,000 $lbs/in^2$ into a tablet. A small amount of liquid oozed from the base of the die during pressing. When the tablets were placed in the device described in the copending application they lasted for 96 hours. There was some small degree of staining visible in the toilet bowl but the degree of staining was judged to be only moderate.

## EXAMPLE 3

20 g of the neutralized BAYHIBIT brand material was placed on a watch glass and then placed in oven at 95$^0$C for 50 hours. 6 g of the amorphous solid that resulted was then mixed with 22 g of GSD-615 halohydantoin and 22 g of GSD-560 halohydantoin. The resulting material blended very nicely in a WARING blender and was pressed without any expression of liquid. The tablet was placed in the device shown in the copending application and was estimated to last only 48 hours. It would provide approximately 480 flushes at a chloride level of 3.8 ppm.

EXAMPLE 4

The tetrasodium salt of the BAYHIBIT brand material was used in this Example. 24 g of the GSD-560 and GSD-615 halohydantoin materials were each mixed with 2 g of the aforesaid sodium salt of the BAYHIBIT material in a WARING blender. The resulting mixture was pressed at 10,000 lbs/in$^2$. Treatment with 0.01 M thiosulfate indicated a chloride residual level of 3.8 ppm. When placed in the device described in the copending application some very slight rust stains on the toilet bowl were noted after 55 hours. The degree of staining was much less intense than observed without the presence of the BAYHIBIT brand material. It was estimated that the tablet would provide approximately 72 hours of good performance during the flush test.

## EXAMPLE 5

This Example illustrates the use of sodium hexametaphosphate and sodium pyrophosphate as scale inhibitor components along with the halohydantoin active ingredient.

A tablet was formed as previously described by combining the GSD-560 halohydantoin material with 3.0% by weight of sodium hexametaphosphate, based on the weight of halohydantoin. When this tablet was placed in the device shown in the copending application it did not rapidly disintegrate. The total flushing period was from three to four days and the chlorine level was about 2 ppm.

A similar tablet was made with the use of 3% sodium pyrophosphate. The chlorine level was 4 - 5 ppm. The tablet lasted over 48 hours during the flush test.

EXAMPLE 6

30 g of GSD-560 brand material, 14 g of GSD-615 brand material, and 6 g of the tetrasodium salt of the BAYHIBIT brand material were mixed in a WARING blender for a few minutes and pressed into 5 g tablets. When subjected to the previously described flushing test no staining was visible even after over 96 hours. It was estimated that the tablet would last from 105 to 110 hours during the flushing test, or more than 1000 flushes. Assuming approximate 8 flushes per day in the normal household setting, this would provide nearly 4 months of protection in actual commercial usage. After 100 hours, staining appeared to be starting. The tablets at this point were almost totally disintegrated.

The above experiment was repeated. After 100 hours no staining was noted in the repeated version.

Another test in a bathroom setting averaging 8 - 10 flushes per day indicated that approximately one third of the tablet was used after about 95 hours. Some metallic stain on the toilet bowl was starting at that point.

## EXAMPLE 7

Tablets were made as described before from a mixture of 33 g of GSD-516 brand material, 15.5 g of GSD-615 brand material and 4.5 g of sodium acid pyrophosphate. After 10 hours in the flush test the chlorine level was 3.0 ppm. After 89 hours it was 2.1 ppm and no staining was visible. The background chlorine level in the tap water used in this test was approximately 1 - 2 ppm. It was estimated that the tablets should last approximately 100 hours or 1000 flushes.

A repetition of the above test using a tablet formed from a mixture of 33 grams GSD-560 brand material, 12 g of GSD-615 brand material, and 5 g of sodium acid pyrophosphate indicated good results at 96 hours with no staining.

## EXAMPLE 8

A tablet was formed from 31 g of GSD-560 brand material, 14.5 g of GSD-615 brand material and 4.5 g of sodium hexametaphosphate. After 72 hours in the previously described flush test, no sign of staining was apparent on the toilet bowl.

EXAMPLE 9

A 15 g tablet was formed as previously described by mixing 30 g of GSD-560 material, 14 g of GSD-615 material, 3 g of the tetrasodium salt of the BAYHIBIT AM brand material and 3 g of sodium acid pyrophosphate. The tablet was used in the previously described flush test. The initial ppm of chlorine was 3.2. After 84 hours the chlorine level was 1.7 ppm and after 120 hours or 1200 flushes the chlorine level was 1.2 ppm. After 84 hours in the flush test some very slight staining of the bowl was visible. After 1200 flushes the stains became fairly prominent.

## EXAMPLE 10

A tablet was formed by mixing 30 parts by weight of GSD-650 brand material, 15 parts by weight of GSD-615 brand material, and 5 parts by weight of the dry neutralized solid 60% trisodium salt of 1-hydroxyethylidene-1,1-diphosphonic acid (DEQUEST 2015 DN brand from Monsanto). The chlorine level was 5.4 ppm after two hours of flushing. Indications were that the staining became prominent after three to four hundred flushes.

Another tablet formulation was made which performed quite similarly to the one described immediately above. This tablet was formed from 30 parts by weight of GSD-560 material, 14 parts by weight of GSD-615 material, 3.0 parts by weight of the sodium acid pyrophosphate and 3.0 parts by weight of the DEQUEST 2015 DN brand material.

## EXAMPLE 11

Tablets (15 g) were formed by compressing a mixture, at 10,000 $lbs/in^2$, of 33 parts by weight of GSD-560 brand material, 12 parts by weight of GSD-615 brand material and 5.0 parts by weight of sodium hexametaphosphate. Excellent results were obtained.

EXAMPLE 12

Several 1-1/2 inch tablets were formed from 38 weight percent GSD-560 brand material, 38% GSD-615 brand material and 24% of the tetrasodium salt of the BAYHIBIT AM brand material. The 20 g tablets that were pressed at 10,000 lbs/in$^2$ lasted about 30 hours. However, staining was evident after about 24 hours. The 20 g tablets tested at 20,000 lbs/in$^2$ did not show the staining problem.

The results were repeated using 60 parts by weight of GSD-560 brand material, 25 parts by weight of GSD-615 brand material and 15 parts by weight of the tetrasodium salt of the BAYHIBIT AM material, trisodium salt. A 20 g tablet pressed at 10,000 lbs/in$^2$ lasted over 48 hours with no stain evident.

## EXAMPLE 13

A 15 g tablet was prepared by pressing at 10,000 $lbs/in^2$ (gauge) a mixture of 60 parts by weight of GSD-560 brand material, 15 parts by weight of GSD-615 brand material, and 25 parts by weight of sodium acid pyrophosphate. After 20 hours in the flush test the chlorine level was 2.4 ppm. It was judged that the tablet would last for over 30 hours in the flush test.

A revised formulation was prepared using 55 parts by weight of GSD-560 brand material, 20 parts by weight of GSD-615 brand material and 25 parts by weight of sodium acid pyrophosphate. After 16 hours in the flush test the chlorine level was 2.6 ppm.

COMPARATIVE EXAMPLES 14-16

50 g. of GSD-615 brand material, 45 g. of GSD-560 brand material and 5 g. of sodium tripolyphosphate were mixed very gently in a WARING blender. The mixture was pressed into tablets at 10,000 $lbs/in^2$. When tested in the device previously described, they began to disintegrate after about 10 - 15 flushes. This did not appear to be a decomposition problem but was believed due to a greater than desired solubility of the tripolyphosphate additive in the tablets.

Separately, 50 g. of GSD-615 material, 47 g. of GSD-560 material, and 3 g. of tetrasodium ethylenediamine tetraacetate (QUESTEX 45W brand) were mixed and pressed into tablets at 10,000 $lbs/in^2$ after gentle blending. There was a very rapid disintegration of tablets with small discharges of gas apparently due to internal gas build up due to reaction between the halohydantoin and scale inhibitor components. The QUESTEX brand sequestrant was reactive (or non-compatible) under the conditions employed.

Separately, 50 parts by weight of the GSD-615 material, 40 parts by weight of the GSD-560 material, and 10 parts by weight of polymeric amine (NALCO TX 3008 brand) were gently blended and tested in accordance with the previously described flush test. The tablets disintegrated very rapidly. This was believed due to reaction of the NALCO brand material when used in the amount indicated.

EXAMPLE 17

Polymeric amine (NALCO 3008 brand) was dried at 95°C. overnight forming a semi-dry film. The following materials were thoroughly blended in a WARING blender and pressed into 1-1/8 inch diameter tablets on a Carver press at 10,000 lbs/in$^2$: 30 g. of GSD-560 material, 16 g. of GSD-615 material, and 4 g. of the NALCO 3008 material. These tablets were placed in the aforementioned device and subjected to the previously described flush test. One tablet disintegrated quickly possibly due to the reasonably soluble NALCO 3008 material washing out of that tablet. The remaining tablets showed acceptable performance. There was a pronounced improvement in stain inhibiting performance possibly due to the low halogen content (about 2 ppm).

## COMPARATIVE EXAMPLE 18

A mixture of 31 g. of GSD-560 material, 14.5 g. of GSD-615 material, and 4.5 g. of sodium tripolyphosphate were blended in a WARING blender for 2 - 3 minutes at high speed. Tablets (15 g.) were formed by pressing the mixture using a force of 20,000 $lbs/in^2$. When tested in the previously described flushing test, the tablets disintegrated completely in 5 - 10 flushes. It was judged that the low amount of the GSD-615 material made the tablet too soluble.

## EXAMPLE 19

Comparative Example 18 was repeated with the substitution of sodium hexametaphosphate (VITRAFOS brand). When tested in the flushing test the tablets yielded an initial halogen level of 3.0 ppm. After 72 hours no sign of staining was apparent in the toilet bowl.

The foregoing Examples are not to be construed in a limiting sense since they are only presented to illustrate certain embodiments of the present invention. The scope of protection that is desired is set forth in the claims which follow.

I Claim:

1. A composition for cleaning water containing devices which comprises a mixture of an effective amount for cleaning of the device of at least one halohydantoin cleaning compound admixed with an effective amount for scale inhibition in the device of at least one compatible scale inhibitor composition.

2. A composition as claimed in Claim 1 where the halohydantoin is present at from about 65% to about 99%, by weight of the composition.

3. A composition as claimed in Claim 1 wherein the halohydantoin is present at from about 80% to about 90% by weight of the composition.

4. A composition as claimed in Claim 1 wherein the halohydantoin comprises a 5,5-dialkyl-1,3-dihalohydantoin compound.

5. A composition as claimed in Claim 4 wherein the halohydantoin is present at greater than about 65% by weight of the composition.

6. A composition as claimed in Claim 5 wherein the alkyl groups are $C_1$ - $C_2$ alkyl and the halogen are selected from bromo and chloro.

7. A composition as claimed in Claim 1 wherein the scale inhibitor compound is present at from about 1% to about 35% by weight of the composition.

8. A composition as claimed in Claim 1 wherein the scale inhibitor compound is present at from about 10% to about 20% by weight of the composition.

9. A composition as claimed in Claim 1 wherein the scale inhibitor compound is a salt of a phosphono-carboxylate.

10. A composition as claimed in Claim 1 wherein the scale inhibitor is sodium hexametaphosphate.

11. A composition as claimed in Claim 1 wherein the scale inhibitor is sodium pyrophosphate.

12. A composition as claimed in Claim 1 wherein the scale inhibitor is sodium acid pyrophosphate.

13. A composition as claimed in Claim 1 wherein the scale inhibitor is a salt of 1-hydroxyethylidene-1,1-diphosphonic acid.

14. A composition as claimed in Claim 5 wherein the scale inhibitor is present at up to about 35% by weight and is a salt of a phosphono carboxylate.

15. A composition as claimed in Claim 5 wherein the halohydantoin contains $C_1 - C_2$ alkyl groups and the halogen are selected from bromo and chloro and where the scale inhibitor is a salt of a phosphono carboxylate.

16. A composition as claimed in Claim 15 wherein the halohydantoin is present at from about 65% - 99% and the scale inhibitor is present at 1% - 35%.

17. A composition as claimed in Claim 16 wherein the scale inhibitor is the sodium salt of 2-phosphonobutane-1,2,4-tricarboxylic acid.

18. A composition as claimed in Claim 15 wherein the halohydantoin is present at from about 80% - 90% and the scale inhibitor is present at 10% - 20%.

19. A composition as claimed in Claim 18 wherein the scale inhibitor is the sodium salt of 2-phosphonobutane-1,2,4-tricarboxylic acid.

20. A composition as claimed in Claim 19 wherein the salt is the tetrasodium salt.